# EUROPÄISCHE PATENTSCHRIFT

(11) **EP 2 853 468 B1**
(45) Veröffentlichungstag und Bekanntmachung des Hinweises auf die Patenterteilung: **05.06.2019**
(21) Anmeldenummer: 14177213.7
(22) Anmeldetag: 16.07.2014
(51) Int. Cl.: B61L 29/30, G01S 7/40

(54) **Verfahren und Sensorsystem zum Überwachen eines Raumbereiches**
Method and sensor system for monitoring an area
Procédé et système de capteur destinés à surveiller une zone spatiale

(30) Priorität: 02.08.2013 DE 102013215207
(43) Veröffentlichungstag der Anmeldung: 01.04.2015
(73) Patentinhaber: ROBERT BOSCH GMBH, 70442 Stuttgart (DE)
(72) Erfinder: Lehnertz, Benedikt, 71634 Ludwigsburg (DE); Feile, Florian, 71723 Grossbottwar (DE); van Uffelen, Raphael, 74321 Bietigheim-Bissingen (DE); Steinmetz, Alexander, 74321 Bietigheim-Bissingen (DE)

(56) Entgegenhaltungen:
- EP-A1- 2 202 994
- EP-A1- 2 394 882
- DE-A1- 2 818 942
- DE-U1- 29 623 877
- W. E. L. GRIMSON: "The Combinatorics of Local Constraints in Model-Based Recognition and Localization from Sparse Data", JOURNAL OF THE ASSOCIATION FOR COMPUTING MACHINERY, Bd. 33, Nr. 4, 4. Oktober 1986 (1986-10-04), Seiten 658-686, XP040000535, DOI: 10.1145/6490.6492
- SUZAN P ET AL: "Gefahrenfreiraummeldung mit Radarscanner", SIGNAL + DRAHT, TELZLAFF VERLAG GMBH. DARMSTADT, DE, Bd. 6/99, 1. Juni 1999 (1999-06-01), Seiten 23-27, XP001525463, ISSN: 0037-4997

## Beschreibung

Die vorliegende Erfindung bezieht sich auf ein Verfahren und ein Sensorsystem zum Überwachen eines Raumbereichs.

### Stand der Technik

Das automatische Überwachen von Raumbereichen, insbesondere von so genannten Gefahrenräumen wie etwa Bahnübergängen, wird häufig mit Radarsensoren realisiert. Üblicherweise muss dabei durch spezielle Hardware, so genannte Referenzobjekte, Bezugsobjekte oder Markierungspunkte vorgegeben werden, welcher Raumbereich genau zu überwachen ist.

In der DE 196 12 579 A1 ist eine Anordnung zur Überwachung eines Gefahrenraumes, insbesondere für Vollschranken-Bahnübergänge beschrieben. Dazu ist ein rotierender Radar-Entfernungsmesser am Rand des Gefahrenraumes angeordnet, welcher den Gefahrenraum horizontal abtastet. Auf der Umgrenzung des Gefahrenraumes sind Tripelspiegel als Referenz-Markierungspunkte angeordnet, um die Abtastung auf den Bereich innerhalb dieser Markierungspunkte zu beschränken. In einem Speicher sind Daten bezogen auf den Abstand und den Winkel der Markierungspunkte gespeichert. Mittels eines Korrelators werden durch Vergleich der Referenzdaten mit abgetasteten Daten ermittelte Objekte im Gefahrenraum signalisiert.

Aus der DE 296 23 877 U1 ist eine Gefahrraumüberwachung bekannt. Hierbei ist vorgesehen einen Gefahrraum durch einen Radarsensor und drei Tripelspiegel zu definieren und mittels des Sensors den Gefahrraum auf die Anwesenheit von Objekten zu überwachen.

Aus der DE 28 18 942 sind virtuelle Lichtschutzzäune als Raumüberwachung bekannt. Hierfür werden optische Systeme verwendet.

Aus der EP 2 202 994 A1 ist eine 3D-Kamera zur Raumüberwachung bekannt, wobei eine Aufnahmeeinrichtung anhand von Referenzpositionsdaten kalibriert wird.

Aus W. Eric L. Grimson: "The Combinatorics of Local Constraints in Model-Based Recognition and Localisation from Sparse Data", Journal of the Association for Computing Machinery, Vol. 33, No. 4, ist eine distanzbasierte Mustererkennung bekannt.

### Offenbarung der Erfindung

Die vorliegende Erfindung offenbart ein Verfahren zum Überwachen eines Raumbereichs mit den Merkmalen des Patentanspruchs 1 und ein Sensorsystem zum Überwachen eines Raumbereichs mit den Merkmalen des Patentanspruchs 8.

Demgemäß ist vorgesehen ein Verfahren zum Überwachen eines Raumbereichs mit: Bereitstellen von ersten Eckpunkt-Positionen des zu überwachenden Raumbereichs, welche in einem ersten Koordinatensystem definiert sind, welches Positionen in Bezug auf eine Sensorposition eines Sensors angibt, wobei der zu überwachende Raumbereich sich von einem maximalen Erfassungsbereich des Sensors unterscheidet; Detektieren mindestens eines Objekts mittels des Sensors; Bestimmen von Objekteigenschaften der detektierten Objekte, wobei die Objekteigenschaften zumindest eine Objektposition, welche in dem ersten Koordinatensystem definiert ist, jedes detektierten Objekts umfassen; Ermitteln, basierend auf den bestimmten Objektpositionen, welche der detektierten Objekte innerhalb des Raumbereichs liegende Objekte sind, wobei aus den ersten Eckpunkt-Positionen ein Raumbereichpolygon erstellt wird und bei dem Ermitteln überprüft wird, ob die bestimmten Objektpositionen innerhalb des Raumbereichpolygons liegen; Vergleichen der Objekteigenschaften der in dem Raumbereich liegenden Objekte mit mindestens einer vorgegebenen Vergleichseigenschaft; und Ausgeben eines Signals basierend auf dem Ergebnis des Vergleichens, wobei das ausgegebene Signal zumindest eine Information umfasst, ob ein in dem Raumbereich liegendes Objekt existiert, welches mindestens die vorgegebene Vergleichseigenschaft aufweist.

Das erfindungsgemäße Sensorsystem umfasst: einen Sensor, welcher zum Detektieren mindestens eines Objekts ausgebildet ist und eine Steuereinrichtung, welche derart ausgebildet ist, dass Objekteigenschaften von detektierten Objekte bestimmbar sind, wobei die Objekteigenschaften zumindest eine Objektposition jedes detektierten Objekts umfassen. Mittels der Steuereinrichtung ist durch bereitstellbare erste Eckpunkt-Positionen des zu überwachenden Raumbereichs in einem ersten Koordinatensystem, welches Positionen in Bezug auf eine Sensorposition des Sensors angibt, der zu überwachende Raumbereich festlegbar. Aus den ersten Eckpunkt-Positionen ist ein Raumbereichpolygon erstellbar. Der zu überwachende Raumbereich unterscheidet sich von einem maximalen Erfassungsbereich des Sensors. Weiterhin ist mittels der Steuereinrichtung basierend auf den bestimmten Objektpositionen und dem Raumbereichpolygon ermittelbar, welche der detektierten Objekte innerhalb des Raumbereichs liegende Objekte sind; und die Objekteigenschaften der in dem Raumbereich liegenden Objekte sind mit mindestens einer vorgegebenen Vergleichseigenschaft vergleichbar. Das Sensorsystem weist weiterhin eine Ausgabeeinrichtung auf, welche derart ausgebildet ist, dass basierend auf dem Ergebnis des Vergleichens ein Signal ausgebbar ist. Das ausgebbare Signal umfasst zumindest eine Information, ob ein in dem Raumbereich liegendes Objekt existiert, welches mindestens die vorgegebene Vergleichseigenschaft aufweist.

### Vorteile der Erfindung

Die der vorliegenden Erfindung zugrunde liegende Idee besteht darin, dass ein zu überwachender Raumbereich überwacht werden kann. Insbesondere müssen keine speziellen Objekte an Eckpunkten des Raumbereichs vorgesehen werden und Referenzobjekte können beliebig installiert werden. Die Referenzobjekte sind für das Überwachen des Raumbereichs nicht notwendig, können aber für ein Justieren oder Re-Justieren bzw. zum Eichen verwendet werden. Der zu überwachende Raumbereich kann daher eine beliebige Form haben und auch an Orten angeordnet bzw. definiert werden, an welchen Referenzobjekte schwer oder gar nicht anzubringen sind, da das Verfahren bzw. das Sensorsystem weitgehend unabhängig von der Umgebung sein kann. Es brauchen also im Wesentlichen keine umgebungsspezifischen Annahmen und/oder Parameter gemacht bzw. vorgegeben werden.

Zudem kann der definierte zu überwachende Raumbereich gemäß der vorliegenden Erfindung leicht und vielfältig verändert werden, ohne dass Veränderungen an dem erfindungsgemäßen Sensorsystem vorgenommen werden müssen. Das erfindungsgemäße Verfahren bzw. System kann daher nicht nur besonders vielseitig eingesetzt werden, sondern erfordert darüber hinaus noch besonders wenige technische Elemente, was die Kosten eines für das Verfahren verwendeten Sensorsystems gegenüber vergleichbaren Sensorsystemen deutlich verringern kann. Außerdem ist das vorgeschlagene System besonders unempfindlich gegen äußere Einflüsse, d.h. besonders robust und wenig fehleranfällig.

Zudem können mittels des erfindungsgemäßen Verfahrens relevante und nicht relevante Objekte innerhalb, aber auch außerhalb, des zu überwachenden Raumbereichs unterschieden und bezüglich ihrer Relevanz klassifiziert werden. So kann beispielsweise entschieden werden, ob eine Notfallaktion ausgeführt werden soll oder nicht. Ist der zu überwachende Raumbereich beispielsweise ein Bahnübergang, kann unterschieden werden, ob sich etwa ein Mensch oder eine rollende Dose innerhalb des Raumbereichs befindet. Handelt es sich um einen Menschen, könnte ein Notbremssignal an einen sich nähernden Zug gesendet werden, während im Falle der Dose keine weitere Aktion nötig wäre. Dadurch kann sich die Häufigkeit eines "falschen Alarms" verringern, was eine Verringerung von Verzögerungen, Unannehmlichkeiten und daraus entstehenden Kosten zur Folge haben kann.

Das Überwachen kann, im Gegensatz zu einer sektor- oder intervallbasierten Abtastung, kontinuierlich erfolgen. Somit ergeben sich keine Lücken im überwachten Raumbereich.

Erfindungsgemäß umfasst das Verfahren die weiteren Verfahrensschritte: Bereitstellen von Referenzobjekten in einem Sichtfeld des Sensors an ersten Referenzobjekt-Positionen, welche in einem zweiten Koordinatensystem definiert sind, welches Positionen in Bezug auf einen von dem Sensor unabhängigen Ursprung angibt; Erstellen einer Liste der Referenzobjekte mit einer eindeutigen Reihenfolge der Referenzobjekte, wobei gemäß der Reihenfolge auf ein letztes Referenzobjekt der Liste ein erstes Referenzobjekt der Liste folgt; Berechnen von ersten Abständen der Position jedes Referenzobjekts zu der Position eines in der Liste unmittelbar nachfolgenden Referenzobjekts; Berechnen von zweiten Abständen von allen bestimmten Objektpositionen zu jeweils allen anderen Objektpositionen; Identifizieren der Referenzobjekte in den mittels des Sensors detektierten Objekten basierend auf einem Vergleich der berechneten ersten Abstände und der berechneten zweiten Abstände; und Festlegen der Objektpositionen der identifizierten Referenzobjekte als zweite Referenzobjekt-Positionen der Referenzobjekte in dem ersten Koordinatensystem. Gemäß diesen Verfahrensschritten kann die Inbetriebnahme des Sensorsystems nach dem Plug-and-Play-Prinzip erfolgen. Damit kann eine schnelle Inbetriebnahme ohne eine fehleranfällige Justierung bzw. Kalibrierung durch einen Experten erfolgen.

Durch wiederholtes oder kontinuierliches Durchführen einiger oder aller dieser Schritte kann auch eine wiederholte oder kontinuierliche automatische Kalibrierung des Sensors erfolgen. Die Kalibrierung besteht insbesondere im Erkennen des zu überwachenden Raumbereichs. Die Referenzobjekte können Tripelspiegel sein. Es können aber auch charakteristische, stationäre Objekte wie z.B. ein Mast, verwendet werden. Somit sind auch fest installierte und damit kostengünstige und wenig fehleranfällige Objekte als Referenzobjekte verwendbar. Bekannte Objekteigenschaften der als Referenzobjekte verwendeten Objekte können beim Identifizieren der Referenzobjekte in den von dem Sensor detektierten Objekten nützlich sein.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung des erfindungsgemäßen Verfahrens wird der Sensor von dem Raumbereich beabstandet angeordnet. Gemäß einer weiteren bevorzugten Weiterbildung werden Referenzobjekte innerhalb und/oder außerhalb und/oder an einem Rand des Raumbereichs angeordnet bereitgestellt. Somit sind auch Raumbereiche überwachbar, an oder in denen der Sensor und/oder Referenzobjekte nicht kostengünstig oder sicher angeordnet, d.h. aufgestellt und/oder installiert, werden können.

Gemäß einer weiteren bevorzugten Weiterbildung wird das Ermitteln, welche der detektierten Objekte innerhalb des Raumbereichs liegende Objekte sind, mittels eines Polygon-Strahltests durchgeführt. Mittels des Polygon-Strahltests wird überprüft, welche der Objektpositionen innerhalb des Raumbereichpolygons liegen. Alternativ kann auch ein Windungszahl-Verfahren durchgeführt werden. Die Klassifizierung von Objekten in Objekte, welche innerhalb des Raumbereichs liegen und Objekte, welche außerhalb des Raumbereichs liegen, kann somit kostengünstig auf Software-Basis, beispielsweise mittels einer mit dem Sensor gekoppelten Steuereinrichtung, durchgeführt werden. Bei der Klassifizierung kann auch ein Abgleich mit weiteren Sensoren erfolgen. Die weiteren Sensoren können die gleiche Bauart wie der Sensor aufweisen und anders angeordnet sein. Es kann sich aber bei den weiteren Sensoren auch um unterschiedliche Sensoren handeln.

Gemäß einer weiteren bevorzugten Weiterbildung umfasst das Verfahren weiterhin ein Ermitteln einer Dejustage des Sensors durch Vergleichen von in dem ersten Koordinatensystem vorgegebenen dritten Referenzobjekt-Positionen der Referenzobjekte mit den festgelegten zweiten Referenzobjekt-Positionen. Gemäß dieser bevorzugten Weiterbildung kann der Sensor Ausrichtungs- und Positionsänderungen, d.h. eine Dejustage, zum Beispiel durch Erschütterungen, Vandalismus oder Materialermüdung, während des laufenden Betriebs ermitteln.

Gemäß einer weiteren bevorzugten Weiterbildung wird ein automatisches Justieren des Sensors basierend auf der ermittelten Dejustage des Sensors durchgeführt. Der Sensor bleibt also trotz Ausrichtungs- bzw. Positionsänderungen betriebsbereit. Rotationen und Translationen des Sensors können kompensiert werden. Mit anderen Worten findet eine sensorinterne, automatische Kalibrierung des Sensors statt.

Es kann auch eine Dejustage des Sensors durch Vergleichen der in dem ersten Koordinatensystem vorgegebenen dritten Referenzobjekt-Positionen mit Objektpositionen der detektierten Objekte ermittelt werden. So kann auch leicht ermittelt werden, ob das für das Verfahren verwendete Sensorsystem weiterhin korrekt angeordnet ist.

Gemäß einer weiteren bevorzugten Weiterbildung umfasst das Verfahren weiterhin die Verfahrensschritte: Bereitstellen von zweiten Eckpunkt-Positionen, welche in dem zweiten Koordinatensystem definiert sind; Berechnen einer Transformationsvorschrift aus dem zweiten Koordinatensystem in das erste Koordinatensystem basierend auf den ersten Referenzobjekt-Positionen und den zweiten Referenzobjekt-Positionen; und Transformieren der zweiten Eckpunkt-Positionen in dem zweiten Koordinatensystem in die ersten Eckpunkt-Positionen in dem ersten Koordinatensystem mit der berechneten Transformationsvorschrift. Somit ist es möglich, dem Sensor den zu überwachenden Raumbereich in dem zweiten Koordinatensystem anzugeben statt in dem auf den Sensor bezogenen ersten Koordinatensystem. Das Angeben von Koordinaten in dem zweiten, beispielsweise ortsfesten, Koordinatensystem, kann bedeutend einfacher sein als das Angeben von Koordinaten in dem ersten Koordinatensystem, da es dafür keiner genauen Justierung des Sensors bedarf. Das erste Koordinatensystem kann auch als Koordinatensystem des Sensors bezeichnet werden. Beispielsweise können die zweiten Eckpunkt-Positionen auch in Bezug auf jeweils eines oder mehrere Referenzobjekte angegeben werden. Die Transformationsvorschrift, vorteilhafterweise eine Transformationsmatrix, kann auch für andere Transformationen von Koordinaten des ersten in Koordinaten des zweiten Koordinatensystems und anders herum verwendet werden. Basierend auf der berechneten Transformationsvorschrift kann etwa eine Steuereinrichtung auch die Objekteigenschaften der detektierten Objekte, insbesondere deren Objektpositionen, in das zweite Koordinatensystem transformieren. Das zweite Koordinatensystem kann auch als Koordinatensystem des zu überwachenden Raumbereichs bezeichnet werden. Objektpositionen, welche in dem zweiten Koordinatensystem angegeben sind, können die Weiterverarbeitung des ausgegebenen Signals vereinfachen.

Gemäß einer weiteren bevorzugten Weiterbildung des Sensorsystems ist der Sensor als frequenzmodulierter Dauerstrichscanner (FMCW) ausgebildet. Dieser weist vorteilhafterweise eine kleine Bauweise und keine beweglichen Radarteile auf, ist also besonders robust und unabhängig von Wetterbedingungen. Der Radarsensor kann eine fixe Patchantenne aufweisen.

Gemäß einer weiteren bevorzugten Weiterbildung sind außerhalb und/oder an einem Rand des Raumbereichs angeordnet Referenzobjekte angeordnet. Besonders die Anordnung außerhalb des Raumbereichs bietet Vorteile, da die Referenzobjekte nach einer Vielzahl von Gesichtspunkten günstig platziert werden können, ohne dass die genaue Form des zu überwachenden Raumbereichs dabei eine große Rolle spielt.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Flussdiagramm zum Erläutern eines Verfahrens gemäß einer ersten Ausführungsform der vorliegenden Erfindung;
- Fig. 2: eine schematische Anordnung eines Sensors und eines zu überwachenden Raumbereichs;
- Fig. 3: ein schematisches Flussdiagramm zur Veranschaulichung von Verfahrensschritten gemäß weiteren Ausführungsformen der vorliegenden Erfindung;
- Fig. 4: eine schematische Ansicht einer Anordnung von Referenzobjekten in einem zweiten Koordinatensystem;
- Fig. 5: eine schematische Ansicht einer beispielhaften Liste, welche eine eindeutige Reihenfolge der Referenzobjekte festlegt; und
- Fig. 6: eine schematische Ansicht von Abständen von einer Objektposition zu allen anderen Objektpositionen.

In allen Figuren sind gleiche bzw. funktionsgleiche Elemente und Vorrichtungen - sofern nichts anderes angegeben ist - mit denselben Bezugszeichen versehen. Nummerierungen von Bezugszeichen sollen nicht so verstanden werden, dass Verfahrensschritte notwendigerweise in dieser Reihenfolge durchgeführt werden sollen. Insbesondere können auch mehrere Verfahrensschritte gleichzeitig erfolgen.

### Ausführungsformen der Erfindung

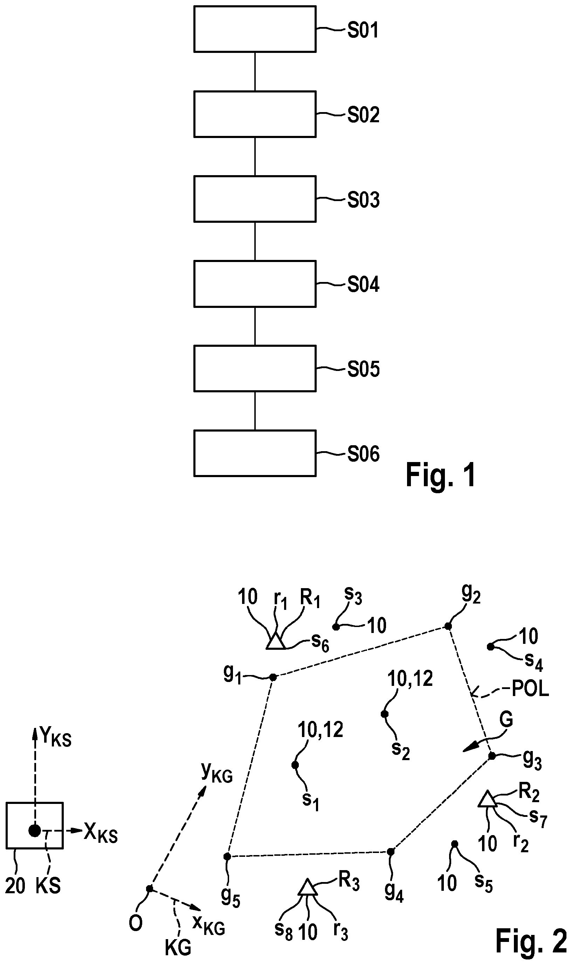

Fig. 1 zeigt ein schematisches Flussdiagramm zum Erläutern eines Verfahrens gemäß einer ersten Ausführungsform der vorliegenden Erfindung.

In einem ersten Verfahrensschritt S01 werden erste Eckpunkt-Positionen gᵢ des zu überwachenden Raumbereichs G bereitgestellt. Die ersten Eckpunkt-Positionen gᵢ sind in einem ersten Koordinatensystem KS definiert, welches Positionen in Bezug auf eine Sensorposition eines Sensors 20 angibt. In Fig. 2 sind zwei zueinander orthogonale Achsen des ersten Koordinatensystems KS mit y_{KS} und x_{KS} bezeichnet. Der zu überwachende Raumbereich G kann beispielsweise ein Gefahrenraum, etwa ein Bahnübergang sein. Die ersten Eckpunkt-Positionen gᵢ bezeichnen Eckpunkte eines Raumbereichpolygons POL welches einen Rand des Raumbereichs G definiert. Das Raumbereichpolygon POL kann beispielsweise ein Rechteck, aber auch ein unregelmäßiges Viereck oder auch ein sonstiges Vieleck, beispielsweise ein Fünfeck, wie in Fig. 2 dargestellt, sein. Gemäß der ersten Ausführungsform ist der Sensor 20 als frequenzmodulierter Dauerstrichscanner 20 ausgebildet.

In einem Verfahrensschritt S02 wird mindestens ein Objekt 10, 12 mittels des Sensors 20 detektiert. In einem Verfahrensschritt S03 werden Objekteigenschaften sᵢ der detektierten Objekte 10, 12 bestimmt. Die bestimmten Objekteigenschaften sᵢ umfassen zumindest eine Objektposition sᵢ jedes detektierten Objekts 10, 12. Verfahrensgemäß sind die Objektpositionen sᵢ in dem ersten Koordinatensystem KS definiert. Es können in Schritt S03 auch weitere Objekteigenschaften wie beispielsweise Geschwindigkeiten, Distanzen, Winkel, RCS, eine geschätzte Höhe etc. bestimmt werden.

In einem Verfahrensschritt S04 wird, basierend auf den bestimmten Objektpositionen sᵢ, ermittelt, welche der detektierten Objekte 10, 12 innerhalb des Raumbereichs G liegende Objekte 12 sind. Dazu kann beispielsweise aus den ersten Eckpunkt-Positionen gᵢ ein Raumbereichpolygon POL erstellt werden. Das Ermitteln S04 kann dann mittels eines Polygon-Strahltests durchgeführt werden. Statt, oder zusätzlich zu, dem Strahltest kann auch beispielsweise ein Windungszahl-Verfahren durchgeführt werden.

In einem Verfahrensschritt S05 werden die Objekteigenschaften sᵢ der in dem Raumbereich G liegenden Objekte 12 mit mindesten einer vorgegebenen Vergleichseigenschaft verglichen. Basierend auf dem Ergebnis des Vergleichens wird in einem Verfahrensschritt S06 ein Signal ausgegeben. Gemäß der ersten Ausführungsform werden Objekteigenschaften von Personenkraftwagen im Vorfeld als Vergleichseigenschaften spezifiziert. Dabei kann es sich beispielsweise um eine bestimmte Reflexivität für von dem Sensor 20 ausgesandte Strahlen, eine bestimmte Mindestgröße und/oder eine bestimmte Höhe, etwa über einem Boden, handeln. Auf diese Weise können die in dem Raumbereich G liegenden Objekte 12 nach ihrer Relevanz klassifiziert werden.

In dem Verfahrensschritt S06 kann vorgesehen sein, dass ein Signal nur dann ausgegeben wird, wenn sich sowohl ein Objekt 12 in dem Raumbereich G befindet als auch mindestens eines der in dem Raumbereich G liegenden Objekte 12 mindestens einer, oder mindestens einer bestimmten Anzahl, oder allen vorgegebenen Vergleichseigenschaften gleichende Objekteigenschaften aufweist. Dafür können verschiedene Sätze von Vergleichseigenschaften vorgegeben werden.

Es kann aber auch vorgesehen sein, dass kontinuierlich ein Signal ausgegeben S06 wird. Ein solches kontinuierlich ausgegebenes Signal kann beispielsweise Informationen umfassen, wie viele Objekte 12 innerhalb des Raumbereichs G zu einem aktuellen Zeitpunkt liegen und welche Objekteigenschaften die Objekte 12 aufweisen. Werden als Objekteigenschaften beispielsweise auch Geschwindigkeiten der detektierten Objekte 10, 12 bestimmt S03, kann auch, kontinuierlich oder vereinzelt, eine Extrapolation durchgeführt werden, wie viele Objekte 10, 12 und mit welchen Objekteigenschaften, basierend auf ihren derzeitigen Geschwindigkeiten, sich in Kürze innerhalb oder außerhalb des Raumbereichs G befinden könnten. Das ausgegebene S06 Signal kann dann auch derartige Informationen umfassen, um einem mit dem Überwachen betrauten Benutzer ein umfassenderes Bild der aktuellen Situation bereitstellen zu können.

Fig. 2 zeigt eine schematische Anordnung des Sensors 20 und eines zu überwachenden Raumbereichs G.

Gemäß Fig. 2 ist der Sensor 20 von dem fünfeckigen Raumbereich G beabstandet angeordnet. Der Raumbereich G ist durch seine Eckpunkte mit den ersten Eckpunkt-Positionen g₁ bis g₅, welche auch das Raumbereichpoylgon POL bilden, definiert. Der Raumbereich G ist dabei die innerhalb des Raumbereichpolygons POL liegende Fläche. Obgleich das Verfahren zur Überwachung eines Raumbereichs hier in zwei Dimensionen beschrieben ist, ist es ohne weiteres auf drei Dimensionen übertragbar. In Fig. 2 sind zwei Objekte 10, 12 mit Objektpositionen s₁ und s₂ dargestellt, welche in dem Raumbereich G liegende Objekte 12 sind. Drei weitere Objekte 10 mit entsprechenden Objektpositionen s₃ bis s₅ befinden sich außerhalb des Raumbereichs G.

Gemäß Fig. 2 sind weiterhin optionale Referenzobjekte Rᵢ, hier R₁ bis R₃, bereitgestellt. Die Referenzobjekte R₁ bis R₃ können von dem Sensor 20 ebenfalls als Objekte 10, 12 detektiert werden. Dabei werden auch für die Referenzobjekte R₁ bis R₃ jeweils entsprechende Objektpositionen s₆ bis s₈ bestimmt S03. Von den Referenzobjekten R₁ bis R₃ können auch erste Referenzobjekt-Positionen rᵢ bekannt sein, wobei die ersten Referenzobjekt-Positionen rᵢ in einem zweiten Koordinatensystem KG definiert sind, welches Positionen in Bezug auf einen von dem Sensor 20 unabhängigen Ursprung O angibt. Der Ursprung O kann beispielsweise auch der Position eines Referenzobjekts Rᵢ, insbesondere eines ortsfesten Referenzobjekts Rᵢ wie etwa einem Mast, entsprechen. Dadurch kann sich das Bestimmen von Koordinaten in Bezug auf den Ursprung O vereinfachen.

Gemäß Fig. 2 weist das zweite Koordinatensystem KG zueinander orthogonale Koordinatenachsen y_{KG} und x_{KG} auf. Das Bereitstellen von Referenzobjekten Rᵢ kann, wie im Folgenden näher erläutert, zum Justieren und Re-justieren, insbesondere zum automatischen und kontinuierlichen Re-justieren des Sensors 20 verwendet werden.

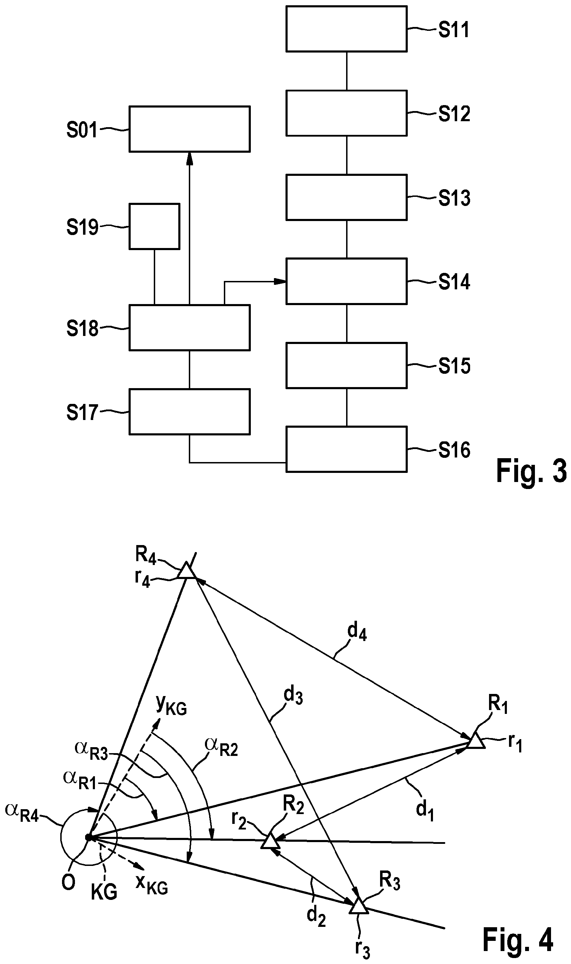

Fig. 3 zeigt ein schematisches Flussdiagramm zur Veranschaulichung von Verfahrensschritten gemäß weiteren Ausführungsformen der vorliegenden Erfindung. Die Verfahrensschritte gemäß Fig. 3 können, einzeln oder in Kombination, zusätzlich zu den Verfahrensschritten gemäß der ersten Ausführungsform durchgeführt werden.

Gemäß einem Verfahrensschritt S11 werden, wie auch in Fig. 2 gezeigt, Referenzobjekte Rᵢ an ersten Referenzobjekt-Positionen rᵢ bereitgestellt, welche Positionen der Referenzobjekte Rᵢ in Bezug auf einen Ursprung O des zweiten Koordinatensystem KG angeben. Bei dem Ursprung O des zweiten Koordinatensystems KG kann es sich beispielsweise um einen raumfesten Ursprung handeln, welcher innerhalb, außerhalb und/oder an einem Rand des Raumbereichs G angeordnet sein kann. Auch die Referenzobjekte Rᵢ können im Wesentlichen beliebig innerhalb und/oder außerhalb und/oder an einem Rand des Raumbereichs G angeordnet bereitgestellt werden.

In einem Verfahrensschritt S12 wird eine Liste 7 der Referenzobjekte Rᵢ mit einer eindeutigen Reihenfolge der Referenzobjekte Rᵢ erstellt. Mit einer eindeutigen Reihenfolge ist dabei insbesondere gemeint, dass mittels der Liste 7 jedem Referenzobjekt Rᵢ ein unmittelbar nachfolgendes Referenzobjekt Rᵢ₊₁ zugeordnet ist. Einem letzten Referenzobjekt Rₙ der Liste 7 ist ein erstes Referenzobjekt R₁ der Liste 7 zugeordnet. Gemäß einer Ausführungsform wird die eindeutige Reihenfolge der Referenzobjekte Rᵢ gemäß der Liste 7 dadurch festgelegt, dass Winkel α_{Ri} bestimmt werden, in welchen die Referenzobjekte Rᵢ bezüglich der Koordinatenachse y_{KG} in der von den Koordinatenachsen x_{KG} und y_{KG} aufgespannten Ebene angeordnet sind.

Fig. 4 zeigt eine schematische Ansicht einer Anordnung der Referenzobjekte Rᵢ, hier R₁ bis R₄ in dem zweiten Koordinatensystem KG. Wie in Fig. 4 dargestellt, wird dabei dasjenige Referenzobjekt Rᵢ als erstes Referenzobjekt R₁ an erster Stelle auf die Liste 7 gesetzt, welches mit der Koordinatenachse y_{KG} im Uhrzeigersinn gemessen einen kleinsten Winkel α_{R1} einschließt. Als dem ersten Referenzobjekt R₁ nachfolgendes zweites Referenzobjekt R₂ wird dasjenige Referenzobjekt Rᵢ bezeichnet und somit als zweites auf die Liste 7 gesetzt, welches in Bezug auf den Ursprung O in einem zweitkleinsten Winkel α_{R2} in Bezug auf die Koordinatenachse y_{KG} angeordnet ist. Für ein Fig. 4 weiterhin dargestelltes drittes und viertes Referenzobjekt R₃, R₄ wird ebenso verfahren. Auf das vierte Referenzobjekt R₄, welches in dem in Fig. 4 dargestellten Beispiel in einem größten Winkel α_{R4}, im Uhrzeigersinn gemessen, in Bezug auf die Koordinatenachse y_{KG} angeordnet ist, und welches dementsprechend als letztes Referenzobjekt Rₙ auf der Liste 7 angeordnet ist, ist definitionsgemäß das erste Referenzobjekt R1 nachfolgend.

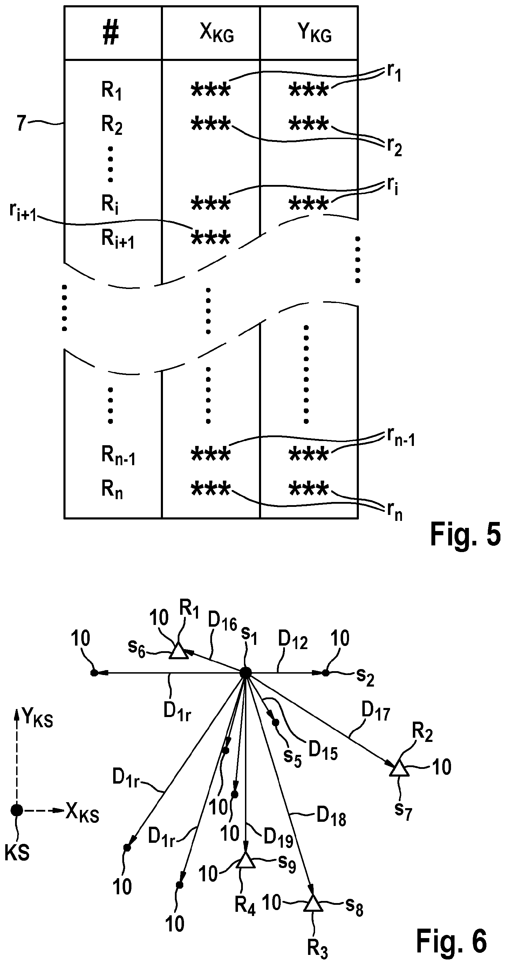

Figur 5 zeigt eine schematische Ansicht einer beispielhaften Liste 7, welche eine eindeutige Reihenfolge der Referenzobjekte Rᵢ festlegt. Gemäß Figur 5 weist die Liste drei Spalten auf, wobei die erste Spalte eine Nummerierung der Referenzobjekte Rᵢ zum Festlegen der eindeutigen Reihenfolge aufweist. Die zweite Spalte beschreibt X-Koordinaten der Referenzobjekte Rᵢ in Bezug auf die Koordinatenachse X_{KG} und die dritte Spalte umfasst Y-Koordinaten der Referenzobjekte Rᵢ in Bezug auf die Achse Y_{KG} des Koordinatensystems KG. Die Zahlenwerte sind in Figur 5 als Folge von drei Sternchen angedeutet.

In einem Verfahrensschritt S13 werden erste Abstände dᵢ der ersten Referenzobjekt-Position rᵢ jedes Referenzobjekts Rᵢ zu der Position rᵢ₊₁ eines dem Referenzobjekt Rᵢ in der Liste 7 unmittelbar nachfolgenden Referenzobjekts Rᵢ₊₁ berechnet. Das heißt, der erste Abstand d₁ ist der Abstand zwischen der ersten Referenzobjekt-Position r₁ des ersten Referenzobjekts R₁ und der ersten Referenzobjekt-Position r₂ des zweiten Referenzobjekts R₂ usw. Der erste Abstand d₄ ist der Abstand zwischen der ersten Referenzobjekt-Position r₄ des vierten Referenzobjekts R₄ und der ersten Referenzobjekt-Position r₁ des ersten Referenzobjekts R₁, wie in Fig. 4 gezeigt.

In einem Verfahrensschritt S14 werden zweite Abstände D_{qr} von allen bestimmten Objektpositionen s_{q} zu jeweils allen anderen Objektpositionen sᵣ berechnet, wie in Figur 6 veranschaulicht.

Fig. 6 zeigt eine schematische Ansicht der zweiten Abstände D₁ᵣ von der Objektposition s₁ zu allen anderen Objektpositionen sᵣ. Der zweite Abstand zwischen der Objektposition s₁ und der Objektposition s₂ wird dabei als zweiter Abstand D₁₂ bezeichnet usw. Da auch die Referenzobjekte R₁ bis R₄ von dem Sensor 20 als Objekte 10 detektiert S02 werden, umfassen die bestimmten Objektpositionen sₗ auch die Positionen der Referenzobjekte R₁ bis Rₙ, jeweils definiert in dem ersten Koordinatensystem KS. Im beschriebenen Beispiel beträgt eine Anzahl n der Referenzobjekte Rᵢ vier, also n=4.

In einem Verfahrensschritt S15 werden in dem mittels des Sensors 20 detektierten S02 Objekten 10, 12 die Referenzobjekte Rᵢ identifiziert. Gemäß der mit Bezug auf Figur 3 beschriebenen Ausführungsform geschieht dies durch einen Vergleich der berechneten S13 ersten Abstände dᵢ und der berechneten S14 zweiten Abstände D_{qr}.

Dies kann insbesondere dadurch erfolgen, dass für alle Referenzobjekte Rᵢ Paare von Objektpositionen s_{q}, sᵣ gesucht werden, deren zweiter Abstand D_{qr} im Wesentlichen dem ersten Abstand dᵢ zwischen der ersten Referenzobjekt-Position rᵢ des Referenzobjekts Rᵢ und der ersten Referenzobjekt-Position rᵢ₊₁ des auf das Referenzobjekt Rᵢ nachfolgenden Referenzobjekts Rᵢ₊₁ gleich ist. Dabei kann eine erste Toleranz T_{R} vorgegeben werden, innerhalb welcher ein erster Abstand dᵢ und ein zweiter Abstand D_{qr} als einander im Wesentlichen gleich angesehen werden, das heißt wenn der Betrag |dᵢ - D_{qr}| < T_{R} ist. Für jedes Referenzobjekt Rᵢ und seine erste Referenzobjekt-Position rᵢ folgt eine Lösungsmenge Lᵢ mit entsprechenden Paaren von Objektpositionen s_{q}, sᵣ. Beginnend bei der Lösungsmenge L₁ für das erste Referenzobjekt R₁ und seine erste Referenzobjekt-Position r₁ wird nun eine rekursive Pfadverfolgung durchgeführt, bis ein Pfad P = {p₁,..., pₘ} gefunden wurde, welcher eine Länge n aufweist (das heißt, m=n) und wobei ein erster Punkt p₁ des Pfads P identisch mit einem letzten Punkt des Pfades pₘ ist. Die Pfadpunkte pᵢ des Pfads P entsprechen den Objektpositionen, an welchen sich die Referenzobjekte befinden. Statt des ersten Referenzobjekts R₁ kann auch ein anderes Referenzobjekt Rᵢ als Startpunkt für die rekursive Pfadverfolgung verwendet werden, wenn dies aufgrund bekannter Eigenschaften der Referenzobjekte Rᵢ günstig erscheint.

Die rekursive Pfadverfolgung kann ressourcensparend durchgeführt werden, indem beispielsweise Abbruchkriterien vorgegeben werden, welche die Verfolgung einer Vielzahl von möglichen Pfaden bereits im Anfangsstadium abbrechen können. Beispielsweise kann eine Rückstreuleistung der Referenzobjekte Rᵢ bzw. eine Reflexivität von durch den Sensor 20 ausgesendeten Strahlen, etwa Radarstrahlen, durch die Referenzobjekte Rᵢ bekannt sein. Bei der rekursiven Pfadverfolgung können also beispielsweise solche Pfade sofort ausgeschlossen werden, welche einen Pfadpunkt pᵢ aufweisen, welcher eine Objektposition sᵢ eines Objekts 10, 12 darstellt, dessen Rückstreuleistung bzw. Reflexivität (als bestimmte S03 Objekteigenschaft) nicht im Wesentlichen der bekannten Rückstreuleistung bzw. Reflexivität der Referenzobjekte Rᵢ entspricht. Aus dem gefundenen Pfad P folgt die Zuordnung der Referenzobjekte Rᵢ zu den ihnen entsprechenden Objekten 10, 12.

In einem Verfahrensschritt S16 werden die Objektpositionen sᵢ der identifizierten Referenzobjekte Rᵢ als zweite Referenzobjekt-Positionen r'ᵢ der Referenzobjekte Rᵢ in dem ersten Koordinatensystem KS festgelegt. Als Ergebnis der in Bezug auf Figur 3 beschriebenen Verfahrensschritte S11 bis S16 wurden also in den detektierten S02 Objekten 10, 12 die Referenzobjekte Rᵢ identifiziert. Damit sind die zweiten Referenzobjekt-Positionen r'ᵢ Referenzobjekte Rᵢ in dem ersten Koordinatensystem KS bekannt, obwohl ursprünglich im Verfahrensschritt S11 nur die ersten Referenzobjekt-Positionen rᵢ in dem zweiten Koordinatensystem KG bekannt waren.

Mit den so ermittelten Informationen kann beispielsweise eine Dejustage des Sensors 20 ermittelt und/oder behoben werden. Beispielsweise können dritte Referenzobjekt-Positionen r"ᵢ vorgegeben sein, welche in dem ersten Koordinatensystem KS definiert sind, und an welchen sich bei einer korrekten Justage des Sensors 20 die Referenzobjekte Rᵢ befinden sollen. Durch Vergleich der zweiten Referenzobjekt-Positionen r'ᵢ und der jeweils entsprechenden dritten Referenzobjekt-Positionen r"ᵢ kann daher eine Justage des Sensors 20 ermittelt werden. Basierend auf der ermittelten Dejustage des Sensors 20 kann ein automatisches Justieren bzw. Re-Justieren des Sensors 20 durchgeführt werden.

In Bezug auf Figur 1 wurde beschrieben, dass die ersten Eckpunkt-Positionen gᵢ des zu überwachenden Raumbereichs G in dem ersten Koordinatensystem KS des Sensors 20 bereitgestellt S01 werden. Das Bereitstellen S01 der ersten Eckpunkt-Positionen gᵢ kann durch ein genaues Justieren des Sensors 20 in Bezug auf den Raumbereich G und ein entsprechendes Programmieren des Sensors 20 und/oder der Steuereinrichtung erfolgen. Unter Verwendung der in Bezug auf Figur 3 beschriebenen Verfahrensschritte S11 bis S16 können die Eckpunkte des Raumbereichs G, wie im Folgenden näher beschrieben, auch durch in einem Verfahrensschritt S19 bereitgestellte zweite Eckpunkt-Positionen g'ᵢ definiert werden, welche in dem zweiten Koordinatensystem KG definiert sind. Dies hat den Vorteil, dass ein Messen der zweiten Eckpunkt-Positionen g'ᵢ in dem zweiten Koordinatensystem KG einfacher und schneller zu bewerkstelligen sein kann als ein besonders genaues Ausrichten des Sensors 20. Basierend auf den ersten Referenzobjekt-Positionen rᵢ, welche die Positionen der Referenzobjekte Rᵢ in dem zweiten Koordinatensystem KG angeben und weiterhin basierend auf den zweiten Referenzobjekt-Positionen r'ᵢ, welche Positionen derselben Referenzobjekte Rᵢ in dem ersten Koordinatensystem KS angeben, kann in einem Verfahrensschritt S17 eine Transformationsvorschrift aus dem zweiten Koordinatensystem KG in das erste Koordinatensystem KS berechnet werden. Bei der Transformationsvorschrift kann es sich vorteilhafterweise um eine Transformationsmatrix handeln. Mit der berechneten S17 Transformationsvorschrift können in einem Verfahrensschritt S18 die zweiten Eckpunkt-Positionen g'ᵢ in dem zweiten Koordinatensystem KG in die ersten Eckpunkt-Positionen gᵢ in dem ersten Koordinatensystem KS transformiert werden. Die Verfahrensschritte S14 bis S18 können fortlaufend zyklisch durchgeführt werden, wodurch der Sensor 20 fortlaufend nachjustierbar sein kann. Wie in Fig. 3 angedeutet, können die transformierten S18 ersten Eckpunkt-Positionen gᵢ in dem ersten Koordinatensystem KS wiederum in dem Verfahrensschritt S01 verwendet werden. So kann sichergestellt sein, dass die Verfahrensschritte S01 bis S06 fortlaufend basierend auf korrekt und aktuell bereitgestellten S01 ersten Eckpunkt-Positionen gᵢ durchgeführt werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar.

Es können beispielsweise weitere Sensoren außerhalb des Raumbereichs G installiert werden, um eine Redundanz zu realisieren und/oder den überwachbaren Raumbereich G zu vergrößern.

Sind die dritten Referenzobjekt-Positionen r"ᵢ vorgegeben, kann auch ein anderes als das oben beschriebene Verfahren zum Ermitteln einer Dejustage durchgeführt werden. Dabei kann ermittelt werden, ob sich innerhalb einer vorgegebenen zweiten Toleranz T'_{R} um jede dritte Referenzobjekt-Position r"ᵢ ein detektiertes S02 Objekt 10, 12 befindet. Ist dies beispielsweise für eine Referenzobjekt-Position r"ᵢ nicht der Fall, kann etwa auf eine Verstellung des entsprechenden Referenzobjekts Rᵢ geschlossen werden. Ist dies bei für eine Vielzahl oder gar für alle dritte Referenzobjekten-Positionen r"ᵢ nicht der Fall, kann dies als Indiz für eine Dejustage des Sensors 20 gewertet werden.

## Patentansprüche

1. Verfahren zum Überwachen eines Bahnübergangs, mit:
- Bereitstellen (S01) von ersten Eckpunkt-Positionen (gᵢ) des Bahnübergangs, welche in einem ersten Koordinatensystem (KS) definiert sind, welches Positionen in Bezug auf eine Sensorposition eines Sensors (20) angibt, wobei der Bahnübergang sich von einem maximalen Erfassungsbereich des Sensors (20) unterscheidet;
- Detektieren (S02) mindestens eines Objekts (10, 12) mittels des Sensors (20);
- Bestimmen (S03) von Objekteigenschaften (sᵢ) der detektierten Objekte (10, 12), wobei die Objekteigenschaften (sᵢ) zumindest eine Objektposition (sᵢ), welche in dem ersten Koordinatensystem (KS) definiert ist, jedes detektierten Objekts (10, 12) umfassen;
- Ermitteln (S04), basierend auf den bestimmten Objektpositionen (sᵢ), welche der detektierten Objekte (10, 12) innerhalb des Bahnübergangs liegende Objekte (12) sind, wobei aus den ersten Eckpunkt-Positionen (gᵢ) ein Raumbereichpolygon (POL) erstellt wird und bei dem Ermitteln (S04) überprüft wird, ob die bestimmten Objektpositionen (sᵢ) innerhalb des Raumbereichpolygons (POL) liegen;
- Vergleichen (S05) der Objekteigenschaften (sᵢ) der in dem Bahnübergang liegenden Objekte (12) mit mindestens einer vorgegebenen Vergleichseigenschaft; und
- Ausgeben (S06) eines Signals basierend auf dem Ergebnis des Vergleichens, wobei das ausgegebene (S06) Signal zumindest eine Information umfasst, ob ein in dem Raumbereich (G) liegendes Objekt (12) existiert, welches mindestens die vorgegebene Vergleichseigenschaft aufweist;
- Bereitstellen (S11) von Referenzobjekten (Rᵢ) an ersten Referenzobjekt-Positionen (rᵢ), welche in einem zweiten Koordinatensystem (KG) definiert sind, welches Positionen in Bezug auf einen von dem Sensor (20) unabhängigen Ursprung (O) angibt;
- Erstellen (S12) einer Liste (7) der Referenzobjekte (Rᵢ) mit einer eindeutigen Reihenfolge der Referenzobjekte (Rᵢ), wobei gemäß der Reihenfolge auf ein letztes Referenzobjekt (Rₙ) der Liste (7) ein erstes Referenzobjekt (R₁) der Liste (7) folgt;
- Berechnen (S13) von ersten Abständen (dᵢ) der Position (rᵢ) jedes Referenzobjekts (Rᵢ) zu der Position (rᵢ₊₁) eines in der Liste (7) unmittelbar nachfolgenden Referenzobjekts (Rᵢ₊₁);
- Berechnen (S14) von zweiten Abständen (D_{qr}) von allen bestimmten Objektpositionen (s_{q}) zu jeweils allen anderen Objektpositionen (sᵣ);
- Identifizieren (S15) der Referenzobjekte (Rᵢ) in den mittels des Sensors (20) detektierten Objekten (10, 12) basierend auf einem Vergleich der berechneten (S13) ersten Abstände (dᵢ) und der berechneten (S14) zweiten Abstände (D_{qr}); und
- Festlegen (S16) der Objektpositionen (sᵢ) der identifizierten Referenzobjekte (Rᵢ) als zweite Referenzobjekt-Positionen (rᵢ') der Referenzobjekte (Rᵢ) in dem ersten Koordinatensystem (KS).

2. Verfahren nach Anspruch 1, wobei bei dem Ermitteln (S04) das Überprüfen, ob die bestimmten Objektpositionen (sᵢ) innerhalb des Raumbereichpolygons (POL) liegen, mittels eines Polygon-Strahltests und/oder mittels eines Windungszahl-Verfahrens durchgeführt wird.

3. Verfahren nach Anspruch 1 oder 2, mit:
- Ermitteln einer Dejustage des Sensors (20) durch Vergleichen von in dem ersten Koordinatensystem (KS) vorgegebenen dritten Referenzobjekt-Positionen (rᵢ") der Referenzobjekte (Rᵢ) mit den festgelegten zweiten Referenzobjekt-Positionen (rᵢ') und/oder mit den Objektpositionen (sᵢ) der detektierten (S02) Objekte (10, 12).

4. Verfahren nach Anspruch 3, wobei ein automatisches Justieren des Sensors (20) basierend auf der ermittelten Dejustage des Sensors (20) durchgeführt wird.

5. Verfahren nach einem der vorangehenden Ansprüche 1 bis 4, mit:
- Bereitstellen (S19) von zweiten Eckpunkt-Positionen (gᵢ'), welche in dem zweiten Koordinatensystem (KG) definiert sind;
- Berechnen (S17) einer Transformationsvorschrift aus dem zweiten Koordinatensystem (KG) in das erste Koordinatensystem (KS) basierend auf den ersten Referenzobjekt-Positionen (rᵢ) und den zweiten Referenzobjekt-Positionen (rᵢ'); und
- Transformieren (S18) der zweiten Eckpunkt-Positionen (gᵢ') in dem zweiten Koordinatensystem (KG) in die ersten Eckpunkt-Positionen (gᵢ) in dem ersten Koordinatensystem (KS) mit der berechneten Transformationsvorschrift.

6. Sensorsystem zum Überwachen eines Bahnübergangs, **dadurch gekennzeichnet, dass** das Sensorsystem zur Durchführung jedes Schrittes des Verfahrens nach einem der Ansprüche 1 bis 5 eingerichtet ist.

## Claims

1. Method for monitoring a railway crossing, including:
- providing (S01) first corner point positions (gᵢ) of the railway crossing, which are defined in a first coordinate system (KS), which indicates positions in relation to a sensor position of a sensor (20), wherein the railway crossing differs from a maximum capturing region of the sensor (20);
- detecting (S02) at least one object (10, 12) by means of the sensor (20);
- determining (S03) object properties (si) of the detected objects (10, 12), wherein the object properties (si) comprise at least one object position (sᵢ), which is defined in the first coordinate system (KS), of each detected object (10, 12);
- ascertaining (S04), based on the determined object positions (sᵢ), which of the detected objects (10, 12) are objects (12) located within the railway crossing, wherein a spatial region polygon (POL) is created from the first corner point positions (gᵢ) and a check is performed during the ascertaining (S04) as to whether the determined object positions (sᵢ) are located within the spatial region polygon (POL);
- comparing (S05) the object properties (si) of the objects (12) which are located in the railway crossing to at least one specified comparison property; and
- outputting (S06) a signal based on the result of the comparison, wherein the output (S06) signal comprises at least one piece of information as to whether an object (12) located in the spatial region (G) exists which has at least the specified comparison property;
- providing (S11) reference objects (Rᵢ) at first reference object positions (ri), which are defined in a second coordinate system (KG), which indicates positions in relation to an origin (O) that is independent of the sensor (20);
- creating (S12) a list (7) of the reference objects (Rᵢ) with a unique sequence of the reference objects (Ri), wherein, in accordance with the sequence, a first reference object (Rᵢ) of the list (7) follows a last reference object (Rₙ) of the list (7);
- calculating (S13) first distances (dᵢ) of the position (rᵢ) of each reference object (Rᵢ) from the position (ri+i) of a reference object (Ri+i) that immediately follows in the list (7);
- calculating (S14) second distances (D_{qr}) of all determined object positions (s_{q}) from in each case all other object positions (sᵣ);
- identifying (S15) the reference objects (Rᵢ) in the objects (10, 12), which have been detected by means of the sensor (20), based on a comparison of the calculated (S13) first distances (dᵢ) and the calculated (S14) second distances (D_{qr}); and
- fixing (S16) the object positions (sᵢ) of the identified reference objects (Rᵢ) as second reference object positions (rᵢ') of the reference objects (Rᵢ) in the first coordinate system (KS).

2. Method according to Claim 1, wherein, during the ascertaining (S04), checking as to whether the specific object positions (si) are located within the spatial region polygon (POL) is performed by means of a polygon ray test and/or by means of a winding number method.

3. Method according to Claim 1 or 2, including:
- ascertaining a misalignment of the sensor (20) by comparing third reference object positions (rᵢ") of the reference objects (Rᵢ), specified in the first coordinate system (KS), to the fixed second reference object positions (rᵢ') and/or to the object positions (si) of the detected (S02) objects (10, 12).

4. Method according to Claim 3, wherein automatic alignment of the sensor (20) is performed based on the ascertained misalignment of the sensor (20).

5. Method according to one of the preceding Claims 1 to 4, including:
- providing (S19) second corner point positions (gᵢ'), which are defined in the second coordinate system (KG);
- calculating (S17) a transformation rule from the second coordinate system (KG) to the first coordinate system (KS) based on the first reference object positions (rᵢ) and the second reference object positions (rᵢ'); and
- transforming (S18) the second corner point positions (gᵢ') in the second coordinate system (KG) into the first corner point positions (gᵢ) in the first coordinate system (KS) with the calculated transformation rule.

6. Sensor system for monitoring a railway crossing, **characterized in that** the sensor system is set up for performing each step of the method according to one of Claims 1 to 5.

## Revendications

1. Procédé de surveillance d'un passage à niveau, comprenant :
- fourniture (S01) de premières positions de coin (gᵢ) du passage à niveau, lesquelles sont définies dans un premier système de coordonnées (KS) qui indique des positions par rapport à une position de capteur d'un capteur (20), le passage à niveau se distinguant d'une zone de détection maximale du capteur (20) ;
- détection (S02) d'au moins un objet (10, 12) au moyen du capteur (20) ;
- spécification (S03) de caractéristiques d'objet (si) de l'objet (10, 12) détecté, les caractéristiques d'objet (sᵢ) comprenant au moins une position d'objet (sᵢ) de chaque objet (10, 12) détecté, laquelle est définie dans le premier système de coordonnées (KS) ;
- détermination (S04), sur la base des positions d'objet (si) spécifiées, lesquels parmi les objets (10, 12) détectés sont des objets (12) qui se trouvent à l'intérieur du passage à niveau, un polygone de zone d'espace (POL) étant créé à partir des premières positions de coin (gᵢ) et la présence des positions d'objet (si) spécifiées à l'intérieur du polygone de zone d'espace (POL) étant contrôlée lors de la détermination (S04) ;
- comparaison (S05) des caractéristiques d'objet (si) des objets (12) qui se trouvent dans le passage à niveau avec au moins une caractéristique de comparaison prédéfinie ; et
- délivrance (S06) d'un signal basée sur le résultat de la comparaison, le signal délivré (S06) comprenant au moins une information indiquant s'il existe un objet (12) se trouvant dans la zone d'espace (G) qui possède au moins la caractéristique de comparaison prédéfinie ;
- fourniture (S11) d'objets de référence (Rᵢ) à des premières positions d'objet de référence (ri), lesquelles sont définies dans un deuxième système de coordonnées (KG) qui indique des positions par rapport à une origine (O) indépendante du capteur (20) ;
- création (S12) d'une liste (7) des objets de référence (Rᵢ) avec une séquence explicite des objets de référence (Ri), la séquence étant telle qu'un dernier objet de référence (Rₙ) de la liste (7) est suivi par un premier objet de référence (Rᵢ) de la liste (7) ;
- calcul (S13) de premiers écarts (dᵢ) de la position (rᵢ) de chaque objet de référence (Rᵢ) par rapport à la position (rᵢ₊₁) d'un objet de référence (Rᵢ₊₁) directement suivant dans la liste (7);
- calcul (S14) de deuxièmes écarts (D_{qr}) de toutes les positions d'objet (s_{q}) spécifiées par rapport à toutes les autres positions d'objet (sᵣ) respectives ;
- identification (S15) des objets de référence (Rᵢ) dans les objets (10, 12) détectés au moyen du capteur (20) en se basant sur une comparaison entre les premiers écarts (dᵢ) calculés (S13) et les deuxièmes écarts (D_{qr}) calculés (S14); et
- définition (S16) des positions d'objet (si) des objets de référence (Rᵢ) identifiés en tant que deuxièmes positions d'objet de référence (rᵢ') des objets de référence (Rᵢ) dans le premier système de coordonnées (KS) .

2. Procédé selon la revendication 1, le contrôle, lors de la détermination (S04), de la présence des positions d'objet (si) spécifiées à l'intérieur du polygone de zone d'espace (POL) étant effectué au moyen d'un essai de rayonnement sur polygone et/ou au moyen d'un procédé de nombre d'enroulements.

3. Procédé selon la revendication 1 ou 2, comprenant :
- détermination d'un défaut d'ajustement du capteur (20) par comparaison de troisièmes positions d'objet de référence (rᵢ") des objets de référence (Ri), prédéfinies dans le premier système de coordonnées (KS), avec les deuxièmes positions d'objet de référence (rᵢ') définies et/ou avec les positions d'objet (si) des objets (10, 12) détectés (S02).

4. Procédé selon la revendication 3, un ajustement automatique du capteur (20) étant effectué sur la base du défaut d'ajustement déterminé du capteur (20).

5. Procédé selon l'une des revendications précédentes 1 à 4, comprenant :
- fourniture (S1_{g}) de deuxièmes positions de coin (gᵢ'), lesquelles sont définies dans le deuxième système de coordonnées (KG) ;
- calcul (S17) d'une prescription de transformation du deuxième système de coordonnées (KG) vers le premier système de coordonnées (KS) en se basant sur les premières positions d'objet de référence (rᵢ) et les deuxièmes positions d'objet de référence (rᵢ') ; et
- transformation (S18) des deuxièmes positions de coin (gᵢ') dans le deuxième système de coordonnées (KG) en les premières positions de coin (gᵢ) dans le premier système de coordonnées (KS) avec la prescription de transformation calculée.

6. Système de détection destiné à la surveillance d'un passage à niveau, **caractérisé en ce que** le système de détection est conçu pour exécuter chaque étape du procédé selon l'une des revendications précédentes 1 à 5.
